# EUROPÄISCHE PATENTANMELDUNG

(11) **EP 2 218 935 A1**
(43) Veröffentlichungstag der Anmeldung: **18.08.2010**
(21) Anmeldenummer: 09002193.2
(22) Anmeldetag: 17.02.2009
(51) Int. Cl.: F16F 1/38

(54) **Lageranordnung**

(71) Anmelder: Carl Freudenberg KG, 69469 Weinheim (DE)
(72) Erfinder: Erl, Andreas, 16761 Henningsdorf (DE); Gürtler, Daniel, 12057 Berlin (DE); Hack, Rüdiger, 10713 Berlin (DE); Okunev, Michael, 14473 Potsdam (DE); Selent, Fabian, 16761 Henningsdorf (DE); Joske, Tino, 16761 Henningsdorf (DE)

(57) **Zusammenfassung**

Lageranordnung (1) mit einem Lager (2), umfassend einen Kern (3) und ein Gehäuse (4) die durch einen Federkörper (5) miteinander verbunden sind, wobei das Gehäuse (4) an einem Rahmen (6) befestigt ist und wobei der Rahmen (6) eine Öffnung (7) für den Kern (3) aufweist, wobei auf dem Kern (3) ein Anschlagkörper (8) angeordnet ist, der einem an dem Rahmen (6) angeordneten Gegenanschlagkörper (9) zugeordnet ist und den Ausfederweg des Kerns (3) begrenzt.

## Beschreibung

### Technisches Gebiet

Die Erfindung betrifft eine Lageranordnung mit einem Lager, umfassend einen Kern und ein Gehäuse die durch einen Federkörper miteinander verbunden sind, wobei das Gehäuse an einem Rahmen befestigt ist und wobei der Rahmen eine Öffnung für den Kern aufweist.

### Stand der Technik

Derartige Lageranordnungen sind allgemein bekannt. Die Lager weisen einen Federkörper auf, der meist aus Gummi besteht. Des Weiteren können die Lager einen oder mehrere Räume aufweisen, die mit einer Hydraulikflüssigkeit befüllt sind und fluidströmungsleitend miteinander verbunden sein können und dadurch besondere Dämpfungseigenschaften aufweisen. Bei der Auslegung des Lagers und der Lageranordnung ist darauf zu achten, dass der Federkörper keinem unzulässig hohen Zug beansprucht wird, da der Federkörper ansonsten reißen kann und dessen Gebrauchsdauer eingeschränkt ist. Dies gilt insbesondere dann, wenn der Federkörper aus Gummi oder ähnlichen elastomeren Werkstoffen wie beispielsweise TPE besteht. Derartige Zugbelastungen können beispielsweise bei der Lagerung von Kabinen eines Nutzfahrzeugs entstehen, wenn die Kabine dynamisch belastet wird und Beschleunigungskräften unterworfen ist. Insbesondere bei Kabinenlagerungen ist ein Abreißen des Federkörpers zu vermeiden, da in diesem Fall eine sichere Lagerung der Kabine nicht mehr gewährleistet ist.

### Darstellung der Erfindung

Der Erfindung liegt die Aufgabe zugrunde, eine Lageranordnung bereit zu stellen, bei der eine Überbeanspruchung des Federkörpers durch hohe Zugbeanspruchung vermieden werden kann.

Diese Aufgabe wird mit den Merkmalen von Anspruch 1 gelöst. Auf vorteilhafte Ausgestaltungen nehmen die Unteransprüche Bezug.

Zur Lösung der Aufgabe ist auf dem Kern ein Anschlagkörper angeordnet, der einem an dem Rahmen angeordneten Gegenanschlagkörper zugeordnet ist und den Ausfederweg des Kerns begrenzt. Der Gegenanschlagkörper ist direkt dem Rahmen zugeordnet und bildet einen integralen Teil desselben oder ist an diesem befestigt. Rahmen im Sinne der Erfindung bedeutet eine tragende Teilstruktur, die in der Lage ist, Kräfte aufzunehmen. Dabei kann der Rahmen Teil eines Fahrgestells beispielsweise der Leiterrahmen oder auch Teil einer Kabine sein. Bei einer Befestigung einer Kabine mittels Lager an dem Rahmen des Fahrzeugs lagert die Kabine auf mehreren, beispielsweise vier Lagern, so dass Erschütterungen und Beschleunigungen nicht direkt von dem Rahmen des Fahrzeugs auf die Kabine übertragen werden. Dabei kann das Gehäuse des Lagers unterhalb des Rahmens angeordnet und an diesem befestigt sein und der Kern ragt derartig in Richtung auf die Kabine, dass der Kern mit der Kabine verbunden werden kann. Bei dynamischer Beanspruchung können die Beschleunigungen dabei auch dergestalt sein, dass die Kabine aus den Lagern ausfedert und die Federkörper der Lager auf Zug beansprucht werden können. Um dies zu vermeiden, ist an dem Kern ein Anschlagkörper angeordnet, der nach einer definierten Ausfederstrecke des Kerns an dem Gegenanschlagkörper anschlägt und so ein weiteres Ausfedern verhindert. Dadurch wird eine Überbeanspruchung und vorzeitiger Verschleiß des Federkörpers vermieden. Des Weiteren kann durch den Anschlag verhindert werden, dass die Kabine aus der Lagerung herausreißt und sich von dem Rahmen unzulässig weit entfernt. Dadurch wird die Kabine auch bei starken Beschleunigungen, wie sie beispielsweise bei Unfällen auftreten können, nah am Rahmen gehalten.

Der Anschlagkörper kann ringförmig ausgebildet sein. Bei dieser Ausgestaltung umgibt der Anschlagkörper den Kern vollständig und es entsteht eine große Anlagefläche an dem Gegenanschlag, so dass die Belastungen des Anschlagkörpers minimiert werden können. Des Weiteren ist die Funktion des Anschlages unabhängig von der Belastungsrichtung.

Der Anschlagkörper kann mit einer Gummispur versehen sein. Durch die Gummispur ergibt sich ein weicher und materialschonender Anschlag des Anschlagkörpers an dem Gegenanschlag. Die Gummispur kann dazu auch profiliert sein, um einen progressiven Anschlag zu erzeugen. In einer anderen Ausgestaltung kann die Gummispur auch an dem Gegenanschlag oder an beiden Anschlägen vorgesehen sein. Als Material für die Gummispur kommt eine Vielzahl elastomerer Werkstoffe in Betracht.

Der Anschlagkörper kann im unbelasteten Zustand mit Vorspannung am Gegenanschlagkörper anliegen. Nach der Montage der Kabine senkt sich das Lager um eine definierte Strecke, wodurch sich der maximale Ausfederweg ergibt. Bei dieser Ausgestaltung ist der Federkörper jedoch auch während des Ausfederns und auch noch nach Anlage des Anschlages an dem Gegenanschlag stets druckbeansprucht, so dass eine Überbeanspruchung des Federkörpers durch Zugbeanspruchung ausgeschlossen ist.

Der Gegenanschlagkörper kann einen integralen Bestandteil des Rahmens bilden. Bei dieser Ausgestaltung ist der Gegenanschlagkörper dem Randbereich der Rahmenöffnung zugeordnet und kann materialeinheitlich und einstückig mit diesem ausgeführt sein. Diese Ausgestaltung ist besonders Platz sparend und zusätzlich zu montierende Bauelemente für den Gegenanschlag können entfallen.

Der Anschlagkörper kann einen integralen Bestandteil des Kerns bilden. Dabei ist der Anschlagkörper materialeinheitlich und einstückig mit dem Kern ausgebildet. Hierbei ist vorteilhaft, dass sich trotz Funktionserweiterung die Teileanzahl des Lagers nicht vergrößert und dass eine große Formenvielfalt erzeugt werden kann.

Der Anschlagkörper kann ein separates Bauteil sein. Bei dieser Ausgestaltung kann der Anschlagkörper aus einem von dem Kern abweichenden, für Anschlagkörper besonders vorteilhaften Material gefertigt werden. Denkbar ist es, den Anschlagkörper aus einem weichen metallischen Werkstoff herzustellen. Dabei kann der Anschlagkörper insbesondere kraftschlüssig auf dem Kern befestigt werden. Dazu kann die Bohrung des Anschlagkörpers im Vergleich zu dem Kerndurchmesser mit Untermaß hergestellt sein oder der Kern weist ein Gewinde auf, so dass der Anschlagkörper mittels einer Schraubverbindung auf dem Kern gehalten ist.

Dem Kern kann ein weiterer Anschlagkörper zugeordnet sein, der mit dem Rahmen derart zusammen wirkt, dass der Einfederweg des Kerns begrenzt ist. Dadurch ist der Federweg des Lagers in beide Richtungen beschränkt, wobei der Einfederanschlag insbesondere verhindert, dass der Federkörper durch zu hohe Druckbeanspruchungen beschädigt wird. Der weitere Anschlagkörper ist dabei auf der dem Lager gegenüber liegenden Seite des Rahmens des Fahrzeugs angeordnet. Der weitere Anschlag kann ebenfalls mit einer Gummispur versehen sein, um einen weichen Anschlag zu erreichen. Die Gegenanschlagfläche des weiteren Anschlages ist dem Rahmen zugeordnet und kann ein integraler Bestandteil des Rahmens des Fahrzeugs sein.

Der weitere Anschlagkörper kann ein separates Bauteil sein. Bei einer separaten Ausgestaltung des weiteren Anschlagkörpers vereinfacht sich insbesondere die Montage des Lagers. Des Weiteren ist es ebenfalls denkbar, den weiteren Anschlagkörper aus einem von dem Kern abweichenden Material zu fertigen.

Das zuvor beschriebene Lager und die zuvor beschriebene Lageranordnung eignen sich insbesondere zur Lagerung von Kabinen von Fahrzeugen, insbesondere Nutzfahrzeugen. Die erfindungsgemäße Ausgestaltung verhindert, das Abreißen der Kabine und eine Überbeanspruchung der Lager auf denen die Kabine gelagert ist.

### Kurzbeschreibung der Zeichnung

Einige Ausführungsbeispiele der erfindungsgemäßen Lageranordnung werden nachfolgend anhand der Figuren näher erläutert. Diese zeigen, jeweils schematisch:
Fig. 1 eine Lageranordnung mit einem Hydrolager;
Fig. 2 eine Lageranordnung mit einem Gummilager;
Fig. 3 eine Lageranordnung mit montierter Kabine;
Fig. 4 eine Lageranordnung mittels Konsole;
Fig. 5 eine Lageranordnung mit einem separaten weiteren Anschlagkörper;
Fig. 6 eine Lageranordnung mit einem separaten weiteren Anschlagkörper.

### Ausführung der Erfindung

Die Figuren zeigen eine Lageranordnung 1 mit einem Lager 2, ausgebildet als Gummilager oder als Hydrolager. Das Lager 2 besteht aus einem metallischen Kern 3 und einem Gehäuse 4 die durch einen Federkörper 5 aus Gummi miteinander verbunden sind, so dass sich der Kern 3 über dem Federkörper 5 an dem Gehäuse 4 abstützt. Das Gehäuse 4 ist an einem Rahmen 6 eines Nutzfahrzeugs befestigt, wobei der Rahmen 6 eine Öffnung 7 für den Kern 3 aufweist, so dass auf dem Kern 3 eine Kabine 12 eines Nutzfahrzeugs befestigt werden kann. Auf dem Kern 3 ist ein Anschlagkörper 8 angeordnet, der einem an dem Rahmen 6 angeordneten Gegenanschlagkörper 9 zugeordnet ist. Der Anschlagkörper 8 begrenzt gemeinsam mit dem Gegenanschlagkörper 9 den Ausfederweg des Kerns 3. Der Anschlagkörper 8 ist jeweils ringförmig ausgebildet ist und umgibt den Kern 3 vollständig. Es ist jeweils eine Gummispur 10 vorgesehen, die dem Anschlagkörper 8 oder dem Gegenanschlagkörper 9 zugeordnet ist. Die Lageranordnung 1 ist jeweils Teil einer Kabinenlagerung für ein Nutzfahrzeug oder einer Kabinenlagerung für Landmaschinen.

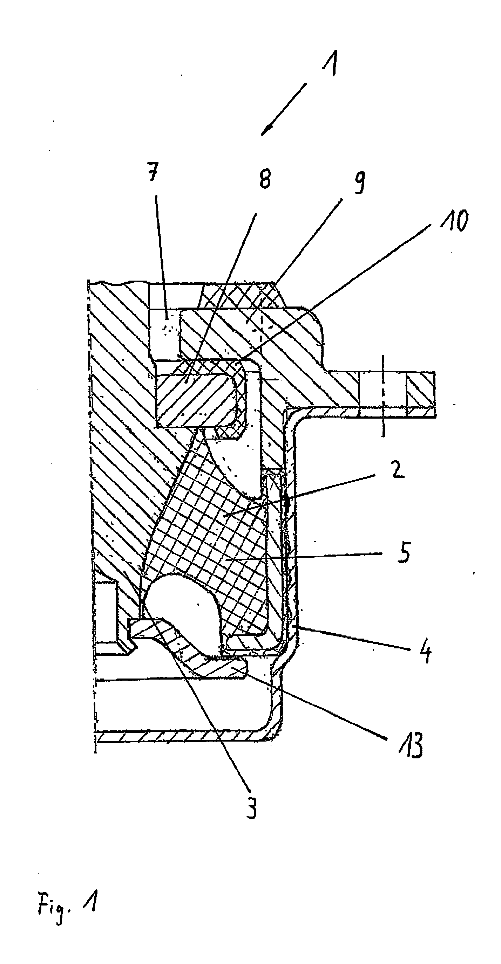

Figur 1 zeigt eine Lageranordnung 1 mit einem Lager 2 bei der der Kern 3 und der Anschlagkörper 8 separate Bauelemente sind. Der Anschlagkörper 8 ist scheibenförmig ausgebildet und auf dem Kern 3 gelagert und kraft/formschlüssig mit diesem verbunden. Der Anschlagkörper 8 ist mit einer Gummispur versehen. Das Lager 2 ist derart abgestimmt, dass der Anschlagkörper 8 im unbelasteten Zustand mit Vorspannung am Gegenanschlagkörper 9 anliegt, wobei sich aufgrund der Gummispur 10 ein weicher Anschlag ergibt. Das Lager 2 ist auf der Unterseite des Rahmens 6 angeordnet und der Kern 3 ragt durch die Öffnung 7 hindurch. Der Gegenanschlagkörper 9 ist ein integraler Bestandteil des Rahmens 6. Es ist auch denkbar das Gehäuse 4 mit dem Gegenanschlagkörper 8 auf einem Rahmen 6 zu montieren. Das Lager 2 ist in dieser Ausgestaltung als Hydrolager mit integrierter Planscherscheibe 13 ausgestaltet.

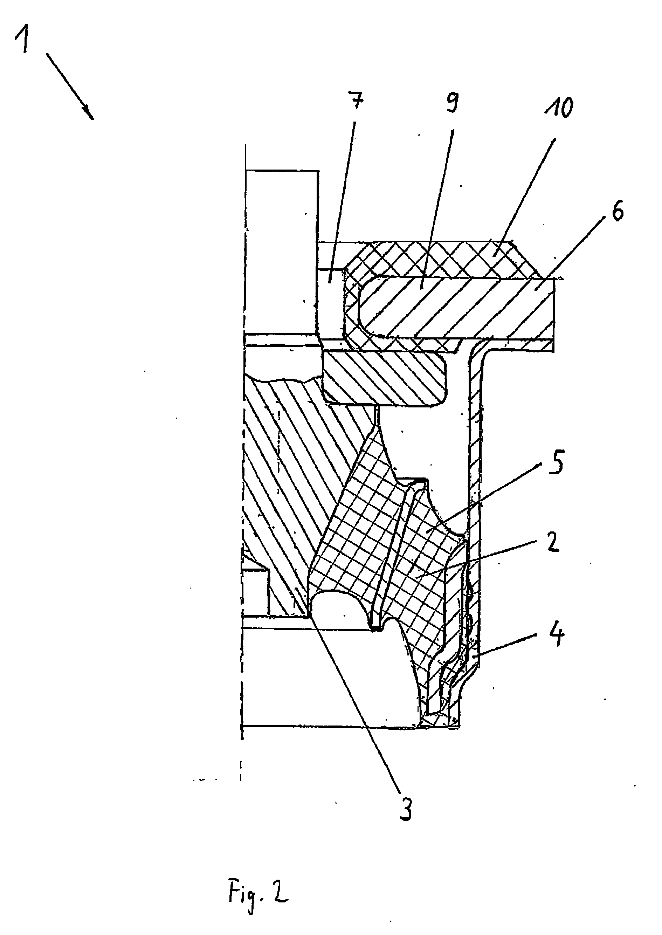

Figur 2 zeigt eine Lageranordnung 1 mit einem Lager 2 bei der der Kern 3 und der Anschlagkörper 8 separate Bauelemente sind. Der Anschlagkörper 8 ist scheibenförmig ausgebildet und auf dem Kern 3 gelagert und kraft/formschlüssig mit diesem verbunden. Der Gegenanschlagkörper 9 ist mit einer Gummispur 10 versehen. Das Lager 2 ist derart abgestimmt, dass der Anschlagkörper 8 im unbelasteten Zustand mit Vorspannung am Gegenanschlagkörper 9 anliegt, wobei sich aufgrund der Gummispur 10 ein weicher Anschlag ergibt. Das Lager 2 ist auf der Unterseite des Rahmens 6 angeordnet und der Kern 3 ragt durch die Öffnung 7 hindurch. Der Gegenanschlagkörper 9 ist ein integraler Bestandteil des Rahmens 6. Das Lager 2 ist in dieser Ausgestaltung als reines Gummilager ausgestaltet.

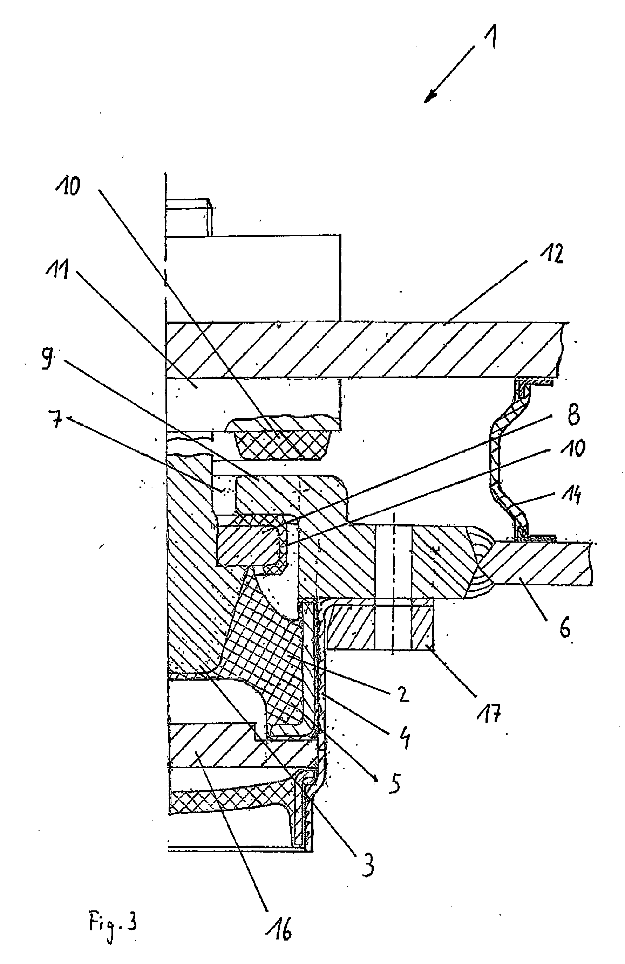

Figur 3 zeigt die Lageranordnung gemäß Figur 1 mit montierter Kabine 12. An dem Boden der Kabine 12 ist ein weiterer Anschlagkörper 11 angeordnet, wobei der Gegenanschlagkörper 9 durch den Rahmen 6 gebildet ist. Der weitere Anschlagkörper 11 ist ebenfalls mit einer Gummispur 10 versehen. Die Kabine 12 ist auf den Kern 3 montiert, wobei der Kern durch die Öffnung 7 des Rahmens 6 hindurch ragt. Der sich ergebende Spalt zwischen Kabine 12 und Rahmen 6 ist durch eine Staubmanschette 14 abgedichtet. Der Gegenanschlagkörper 9 ist ein integraler Bestandteil des Rahmens 6, wobei der Gegenanschlagkörper 9 mit den Anbindungselementen zur Befestigung des Gehäuses 4 an dem Rahmen ein separates Bauelement ist, welches jedoch mit dem Rahmen 6 mittels einer Schweißverbindung unlösbar verbunden ist. Zur besseren Kraftverteilung befindet sich auf der dem Rahmen 6 gegenüberliegenden Seite des Lagers 2 ein Kraftverteilungselement 17, der in dieser Ausgestaltung in Form eines Flansches ausgebildet ist. Das Lager 2 ist in dieser Ausgestaltung als Hydrolager ausgestaltet. Es weist ein den Volumenstrom der hydraulischen Flüssigkeit beeinflussendes Element 16 auf. Dieses Element kann beispielsweise eine Planscherscheibe, einen Tilgerkanal sowie einen oder mehrere Dämpfungskanäle umfassen.

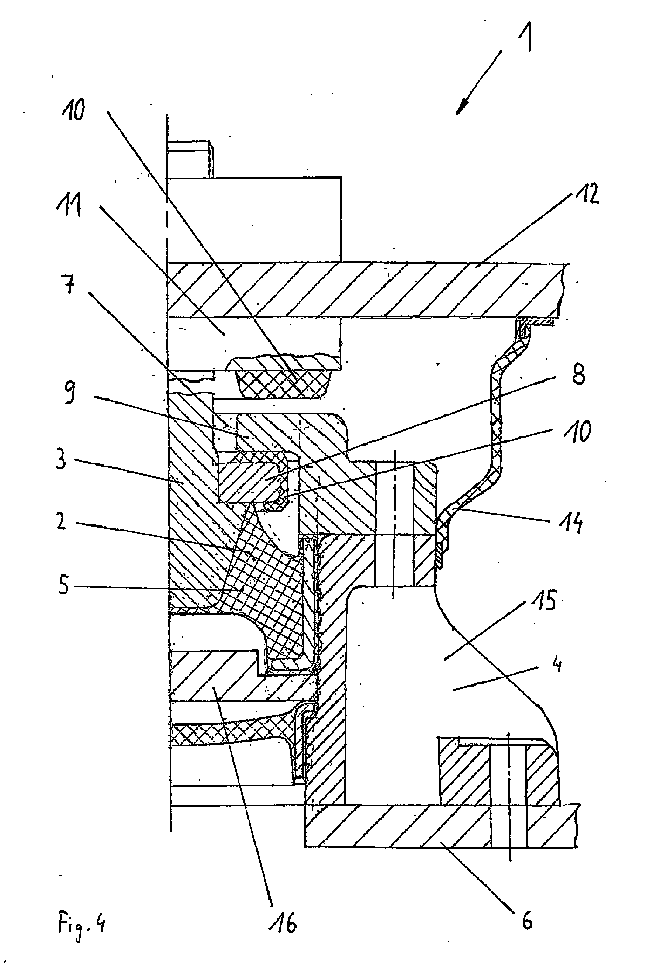

Figur 4 zeigt eine Lageranordnung gemäß Figur 3, wobei der Gegenanschlagkörper 9 gemeinsam mit den Verbindungselementen zur Befestigung des Gehäuses 4 an dem Rahmen 6 Teil einer Befestigungskonsole 15 ist, die wiederum an dem Rahmen 6 lösbar befestigt ist.

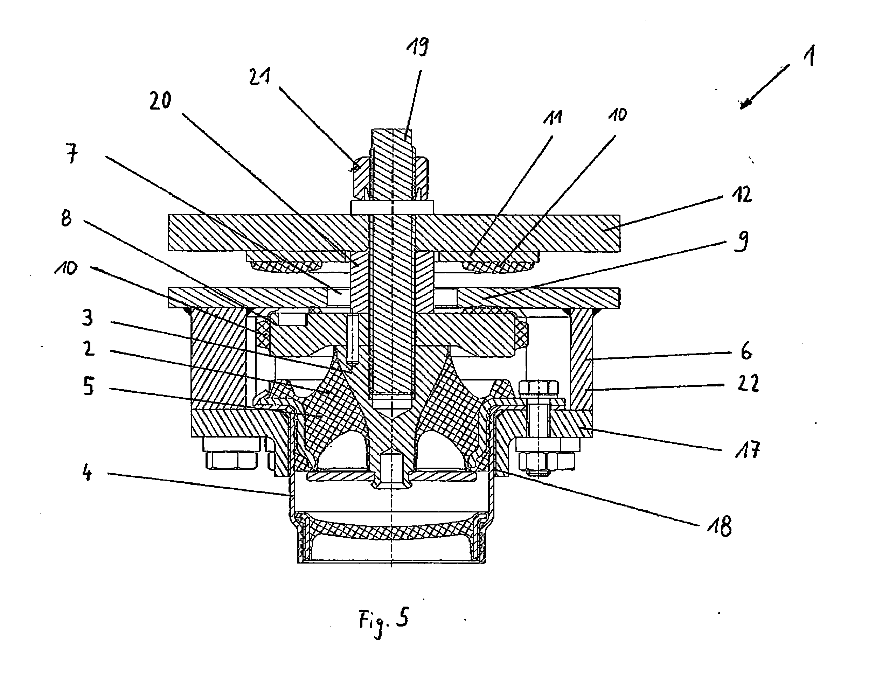

Figur 5 zeigt eine Lageranordnung gemäß Figur 3, wobei der Gegenanschlagkörper 9 integraler Bestandteil des Rahmen 6 ist.
Der Rahmen 6 weist mindestens ein Element 22 auf, welches den Stützring 17 zum Gegenanschlagkörper 9 beabstandet. Zur besseren Zentrierung des Lagers 2 im Stützring 17 weist dieser eine weitere Gummispur 18 auf, welche profiliert sein kann. Es ist auch denkbar, die Montage ohne derartige weitere Gummispur 18 vorzunehmen. Der weitere Anschlagkörper 11 ist als separates Bauelement ausgebildet. Zur Befestigung des weiteren Anschlagkörpers 11 sowie des Anschlagkörpers 8 weist der Kern 3 eine Bohrung 3 auf, in die ein Gewindebolzen eingeschraubt ist. Der Rahmen 6 und der Rahmen 12 sind über den Gewindebolzen zueinander beabstandet, zusätzlich mittels der Hülse 20. Der weitere Gegenanschlagkörper 11 mit der Gummispur 10 ist am Rahmen 12 befestigt. Der Rahmen 12 ist mittels des Gewindebolzens 19, der Mutter 21 und gegebenenfalls der Hülse 20 kraftschlüssig mit dem Kern 3 verbunden, wobei der Anschlagkörper 8 sich im Kraftfluß befindet.

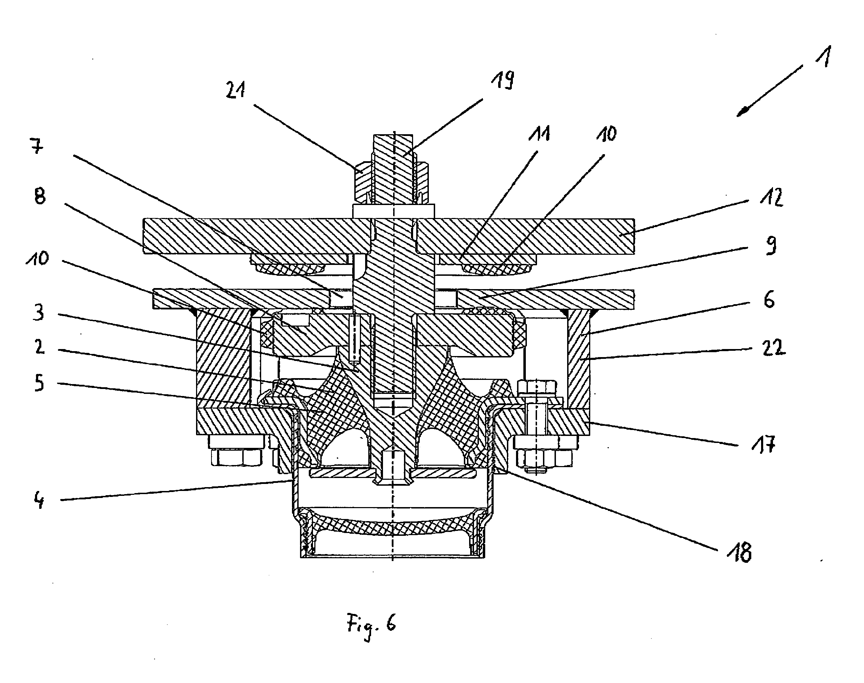

Figur 6 zeigt eine Lageranordnung gemäß Figur 3, wobei der Gegenanschlagkörper 9 integraler Bestandteil des Rahmen 6 ist. Der Rahmen 6 weist mindestens ein Element 22 auf, welches den Stützring 17 zum Gegenanschlagkörper 9 beabstandet. Zur besseren Zentrierung des Lagers 2 im Stützring 17 weist dieser eine weitere Gummispur 18 auf, welche profiliert sein kann. Der weitere Anschlagkörper 11 ist als separates Bauelement ausgebildet. Zur Befestigung des weiteren Anschlagkörpers 11 sowie des Anschlagkörpers 8 weist der Kern 3 eine Bohrung 3 auf, in die ein Gewindebolzen eingeschraubt ist. Der Rahmen 6 und der Rahmen 12 sind über den Gewindebolzen zueinander beabstandet. Der weitere Gegenanschlagkörper 11 mit der Gummispur 10 ist am Rahmen 12 befestigt. Der Rahmen 12 ist mittels des Gewindebolzens 19, der Mutter 21 und gegebenenfalls der Hülse 20 kraftschlüssig mit dem Kern 3 verbunden, wobei der Anschlagkörper 8 sich im Kraftfluß befindet.

## Patentansprüche

1. Lageranordnung (1) mit einem Lager (2), umfassend einen Kern (3) und ein Gehäuse (4) die durch einen Federkörper (5) miteinander verbunden sind, wobei das Gehäuse (4) an einem Rahmen (6) befestigt ist und wobei der Rahmen (6) eine Öffnung (7) für den Kern (3) aufweist, **dadurch gekennzeichnet, dass** auf dem Kern (3) ein Anschlagkörper (8) angeordnet ist, der einem an dem Rahmen (6) angeordneten Gegenanschlagkörper (9) zugeordnet ist und den Ausfederweg des Kerns (3) begrenzt.

2. Lageranordnung nach Anspruch 1, **dadurch gekennzeichnet, dass** der Anschlagkörper (8) ringförmig ausgebildet ist.

3. Lageranordnung nach Anspruch 1 oder 2, **dadurch gekennzeichnet, dass** der Anschlagkörper (8) mit einer Gummispur (10) versehen ist.

4. Lageranordnung nach einem der Ansprüche 1 bis 3, **dadurch gekennzeichnet, dass** der Anschlagkörper (8) im unbelasteten Zustand mit Vorspannung am Gegenanschlagkörper (9) anliegt.

5. Lageranordnung nach einem der Ansprüche 1 bis 4, **dadurch gekennzeichnet, dass** der Gegenanschlagkörper (9) einen integralen Bestandteil des Rahmens (6) bildet.

6. Lageranordnung nach einem der Ansprüche 1 bis 5, **dadurch gekennzeichnet, dass** der Anschlagkörper (8) einen integralen Bestandteil des Kerns (3) bildet.

7. Lageranordnung nach einem der Ansprüche 1 bis 5, **dadurch gekennzeichnet, dass** der Anschlagkörper (8) ein separates Bauteil ist.

8. Lageranordnung nach einem der Ansprüche 1 bis 7, **dadurch gekennzeichnet, dass** dem Kern (3) ein weiterer Anschlagkörper (11) zugeordnet ist, der mit dem Rahmen (6) derart zusammen wirkt, dass der Einfederweg des Kerns (3) begrenzt ist.

9. Lageranordnung nach Anspruch 8, **dadurch gekennzeichnet, dass** der weitere Anschlagkörper (11) ein separates Bauteil ist.

10. Verwendung der Lageranordnung (1) nach einem der vorherigen Ansprüche als Kabinenlagerung eines Fahrzeugs.
